# EUROPÄISCHE PATENTSCHRIFT

(11) **EP 1 834 819 B1**
(45) Veröffentlichungstag und Bekanntmachung des Hinweises auf die Patenterteilung: **24.06.2009**
(21) Anmeldenummer: 07003854.2
(22) Anmeldetag: 26.02.2007
(51) Int. Cl.: B60H 1/34

(54) **Luftausströmer**
Air vent
Dispositif d'écoulement d'air

(30) Priorität: 16.03.2006 DE 102006012473
(43) Veröffentlichungstag der Anmeldung: 19.09.2007
(73) Patentinhaber: Behr GmbH & Co. KG, 70469 Stuttgart (DE)
(72) Erfinder: Feith, Thomas, 70825 Korntal-Münchingen (DE); Riedel, Rudolf, 2-18-26 Komazawa, Setagaya-ku 154-0012 Tokyo (JP); Röhm, Klaus, 71394 Kernen i.R. (DE)

(56) Entgegenhaltungen:
- DE-U1- 20 219 897
- US-A- 5 230 654
- US-A- 5 338 252

## Beschreibung

Die Erfindung betrifft einen Luftausströmer mit einer Vorrichtung zur Beeinflussung einer Richtung eines Luftstromes, die an einer einem zu belüftenden Raum zugewandten Seite des Luftausströmers angeordnet ist und mindestens eine Lamelle und einen auf der Lamelle angeordneten Reiterverstellknopf aufweist, mit dem durch Verschieben in Längsrichtung der Lamelle ein Koppelelement, insbesondere zur Veränderung der Richtung des Luftstromes, verstellbar ist.

Luftausströmer für Kraftfahrzeuge weisen meist eine Vorrichtung zur Beeinflussung einer Richtung eines Luftstroms auf, die an einer einem zu belüftenden Raum zugewandten Seite des Luftausströmers angeordnet ist und Lamellen umfasst.

Aus der DE 202 19 897 U1 ist ein Lamellenbetätigungssystem mit einer ersten Lamelle bekannt, die um eine erste Achse schwenkbar in einem Rahmen gehalten ist, und einer zweiten Lamelle, die um eine zweite Achse schwenkbar in dem Rahmen gehalten ist, wobei auf der ersten Lamelle ein Bedienelement angebracht ist, das über ein Schiebe-/Kardangelenk mit der zweiten Lamelle verbunden ist. Das Schwenken der ersten Lamelle bewirkt eine Beeinflussung der Richtung des Luftstroms in horizontaler, das Schwenken der zweiten Lamelle in vertikaler Richtung. Das Koppelelement zur Verbindung des Verstellelementes mit der zweiten Lamelle liegt dabei im Luftstrom und kann zu erhöhtem Druckabfall und akustischen Beeinträchtigungen führen.

Der Erfindung liegt die Aufgabe zugrunde, einen verbesserten Luftausströmer mit einer Vorrichtung zur Beeinflussung einer Richtung eines Luftstromes anzugeben.

US 5,338,252 offenbart einen Luftausströmer nach dem Oberbegriff des Anspruchs 1.

Der erfindungsgemäße Luftausströmer weist eine Vorrichtung zur Beeinflussung einer Richtung eines Luftstromes auf, die an einer einem zu belüftenden Raum zugewandten Seite des Luftausströmers angeordnet ist. Die Vorrichtung umfasst mindestens eine Lamelle und einen auf der Lamelle angeordneten Reiterverstellknopf, mit dem durch Verschieben in Längsrichtung der Lamelle ein Koppelelement, insbesondere zur Veränderung der Richtung des Luftstromes, verstellbar ist. Die Lamelle ist mehrteilig, insbesondere aus mindestens einem ersten Einzelteil gebildet und der Reiterverstellknopf ist mit dem ersten Einzelteil fest verbunden und mit diesem gemeinsam längsverschiebbar. Das Koppelelement ist mit einem außerhalb des Luftstromes angeordneten Ende des ersten Einzelteiles verbunden ist. Auf diese Weise verursacht das Koppelelement weder Druckabfall noch akustische Belästigungen.

Vorzugsweise ist das erste Einzelteil an zwei Rändern des Luftstroms gelagert und in Lagern längsverschiebbar, so dass es einem Verstellbereich des Reiterverstellknopfes entsprechend weit über die Lager hinausgehen muss. Das Koppelelement ist außerhalb eines dieser Lager an einem Ende des ersten Einzelteils befestigt

In einer alternativen Ausführungsform weist die Lamelle ein zweites Einzelteil auf, welches zumindest teilweise in das erste Einzelteil einschiebbar ist. Der umgekehrte Fall ist auch möglich. Bei einer solchen Lamelle ist nur das erste Einzelteil längsverschiebbar gelagert. Das zweite Einzelteil geht daher nicht über das Lager hinaus, womit an dieser Stelle Platz gespart wird.

Die Lamelle weist vorzugsweise eine in Längsrichtung angeordnete Lamellenachse auf, um die sie schwenkbar ist. Auf diese Weise ist die Richtung des Luftstroms in vertikaler Richtung beeinflussbar. Die Lamellenachse kann ein Bestandteil der Lamelle bzw. ihrer Einzelteile sein, wodurch sich die Fertigung vereinfacht.

Bevorzugt ist mindestens ein Luftkanal in Form eines länglichen Hohlkörpers mit offenen Enden zur Veränderung der Richtung des Luftstromes vorgesehen. Dieser ist um eine in Normalrichtung zu einer längs liegenden Symmetrieachse ausgerichteten Luftkanalachse schwenkbar, wobei die Luftkanalachse ein Bestandteil des Luftkanals sein kann.

Die Luftkanalachse kann insbesondere nicht durchgehend ausgeführt sein, derart, dass sich an je einer Seite des Luftkanals eine Halbachse befindet. Der Luftkanal ist so mit dem Koppelelement gekoppelt, dass ein Längsverschieben des Reiterverstellknopfes zu einem Schwenken des Luftkanals führt. Auf diese Weise kann die Richtung des Luftstromes in horizontaler Richtung beeinflusst werden.

In einer bevorzugten Ausführungsform weist das Koppelelement, z.B. ein Gestänge, mindestens ein Gelenk mit drei Freiheitsgraden, z.B. ein Kugelgelenk, auf, um eine Schwenkbewegung der Lamelle von einer Schwenkbewegung des Luftkanals zu entkoppeln. Hierzu können insbesondere zwei Gelenke mit drei Freiheitsgraden vorgesehen sein.

Dies kann auch erreicht werden, wenn das Koppelelement so an das Ende des ersten Einzelteils gekoppelt ist, dass es von der Schwenkbewegung der Lamelle entkoppelt ist, z.B. indem es sich dort frei drehen kann und sich nur eine Längsverschiebung der Lamelle auf das Koppelelement überträgt.

Bevorzugt weist das erste Einzelteil mindestens einen Anschlag zur Begrenzung der Längsverschiebung auf, so dass die Lamellenachse nicht aus den Lagern rutschen kann.

Ein Ausführungsbeispiel der Erfindung wird anhand von Zeichnungen näher erläutert. Darin zeigen:
Fig. 1 einen Luftausströmer mit einer Vorrichtung zur Beeinflussung einer Richtung eines Luftstroms und
Fig. 2 einen Luftkanal zur Veränderung der Richtung des Luftstroms.

Einander entsprechende Teile sind in allen Figuren mit den gleichen Bezugszeichen versehen.

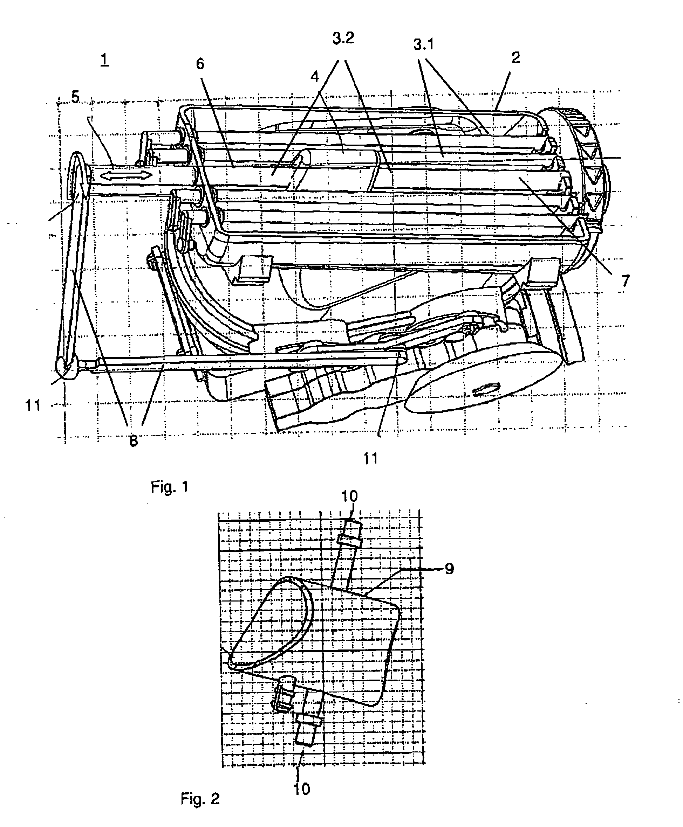

In Figur 1 ist ein Luftausströmer 1 mit einer Vorrichtung 2 zur Beeinflussung einer Richtung eines Luftstromes gezeigt. Die Vorrichtung 2 weist mehrere Lamellen 3.1, 3.2 auf.

Auf der mittleren Lamelle 3.2 ist ein Reiterverstellknopf 4 angeordnet. Der Reiterverstellknopf 4 dient zum einen dem Schwenken der Lamelle 3.2 um eine Lamellenachse 5, wobei die Lamelle 3.2 durch eine nicht im Einzelnen gezeigte Mechanik so mit den anderen Lamellen 3.1 verbunden ist, dass alle Lamellen 3.1, 3.2 synchron geschwenkt werden. Da die Lamellen 3.1, 3.2 waagerecht liegen, kann auf diese Weise eine vertikale Richtung eines aus dem Luftausströmer 1 austretenden Luftstromes beeinflusst werden.

Zum anderen dient der Reiterverstellknopf 4 der Beeinflussung der Richtung des Luftstroms in horizontaler Richtung. Zu diesem Zweck umfasst die Lamelle 3.2 ein erstes Einzelteil 6, auf dem der Reiterverstellknopf 4 fest angeordnet ist. Ein zweites Einzelteil 7 der Lamelle 3.2 ist in das erste Einzelteil 6 einschiebbar.

Der Reiterverstellknopf 4 ist mit dem ersten Einzelteil 6 der Lamelle 3.2 und der damit verbundenen Lamellenachse 5 längsverschiebbar. Das zweite Einzelteil 7 verbleibt beim Verschieben in seiner Position. Das erste Einzelteil 6 weist in Längsrichtung je einen Anschlag auf, der verhindert, dass die Lamellenachse 5 ganz aus dem Lager rutscht, in dem sie längsverschiebbar ist.

Ein Koppelelement 8 ist mit einem außerhalb des Luftstroms gelegenen Ende des ersten Einzelteils 6, in diesem Ausführungsbeispiel gleichzeitig dem Ende der Lamellenachse 5 verbunden. Mit diesem mechanischen Bauteil oder Koppelelement 8 wird die Längsverschiebung auf beispielsweise ein oder mehrere, insbesondere zwei Luftkanäle 9 so übertragen, dass diese um je eine Luftkanalachse 10 geschwenkt werden.

Ein solcher Luftkanal ist in Fig. 2 gezeigt. Der Luftkanal 9 ist in Form eines länglichen Hohlkörpers mit offenen Enden gebildet, der um die in Normalrichtung zu einer längs liegenden Symmetrieachse ausgerichtete Luftkanalachse 10 schwenkbar ist. Dabei kann die Luftkanalachse 10 ein Bestandteil des Luftkanals 9 sein. Die Luftkanalachse 10 ist nicht durchgehend ausgeführt, derart, dass sich an je einer Seite des Luftkanals 9 eine Halbachse befindet. Die Luftkanalachse 10 ist senkrecht ausgerichtet, damit das Schwenken des Luftkanals 9 zu einer Beeinflussung der Richtung des Luftstroms in horizontaler Richtung führt. Die Luftkanäle 9 liegen in Luftstromrichtung vor der mit Lamellen 3.1, 3.2 versehenen Vorrichtung 2 zur Beeinflussung einer Richtung eines Luftstromes.

Um die Schwenkbewegung der Lamelle 3.2 von der Schwenkbewegung der Luftkanäle 9 zu entkoppeln, ist das Koppelelement 8 als Gestänge mit zwei Gelenken 11 mit drei Freiheitsgraden, in diesem Fall Kugelgelenken gebildet.

Dies kann alternativ auch erreicht werden, wenn das Koppelelement 8 so an das Ende des ersten Einzelteils 6 gekoppelt ist, dass es von der Schwenkbewegung der Lamelle 3.2 entkoppelt ist, z.B. indem es sich dort frei drehen kann und sich nur eine Längsverschiebung der Lamelle 3.2 auf das Koppelelement 8 überträgt.

Die Lamelle 3.2 kann auch einteilig ausgeführt sein. In diesem Fall ist sie an beiden Enden längsverschiebbar gelagert. Ebenso könnte bei einer zweiteiligen Ausführung das erste Einzelteil in das zweite Einzelteil einschiebbar sein.

Es kann eine andere Anzahl von Luftkanälen 9, z.B. nur ein Luftkanal 9 vorgesehen werden.

Ein den Reiterverstellknopf 4 auf kurzem Wege mit dem Luftkanal 9 verbindendes, im Luftstrom liegendes Koppelelement 8 ist auch möglich, wäre aber mit den genannten Nachteilen erhöhter Druckabfall und akustische Belästigungen verbunden.

Die Luftkanalachse 10 kann auch durchgehend ausgeführt sein.

## Patentansprüche

1. Luftausströmer (1) mit einer Vorrichtung (2) zur Beeinflussung einer Richtung eines Luftstromes, die an einer einem zu belüftenden Raum zugewandten Seite des Luftausströmers (1) angeordnet ist und mindestens eine Lamelle (3.1, 3.2) und einen auf der Lamelle (3.2) angeordneten Reiterverstellknopf (4) aufweist, mit dem durch Verschieben in Längsrichtung der Lamelle (32) ein Koppelelement (8), insbesondere zur Veränderung der Richtung des Luftstromes, verstellbar ist, **dadurch gekennzeichnet, dass** die Lamelle (3.1, 3.2) mehrteilig ausgebildet ist und der Reiterverstellknopf (4) mit einem ersten Einzelteil (6) fest verbunden und mit diesem gemeinsam längsverschiebbar ist, wobei das Koppelelement (8) mit einem außerhalb des Luftstromes befindlichen Ende des ersten Einzelteiles (6) verbunden ist

2. Luftausströmer (1) nach Anspruch 1, **dadurch gekennzeichnet, dass** die Lamelle (3.2) ein zweites Einzelteil (7) aufweist, wobei das zweite Einzelteil (7) zumindest teilweise in das erste Einzelteil (6) oder das erste Einzelteil (6) zumindest teilweise in das zweite Einzelteil (7) einschiebbar ist.

3. Luftausströmer (1) nach einem der Ansprüche 1 oder 2, **dadurch gekennzeichnet, dass** die Lamelle (3.1, 3.2) eine längs angeordnete Lamellenachse (5) aufweist, um die sie schwenkbar ist, wobei die Lamellenachse (5) ein Bestandteil des ersten Einzelteils (6) und/oder zweiten Einzelteils (7) sein kann.

4. Luftausströmer (1) nach einem der vorhergehenden Ansprüche, **dadurch gekennzeichnet, dass** mindestens ein Luftkanal (9) in Form eines länglichen Hohlkörpers mit offenen Enden zur Veränderung der Richtung des Luftstromes vorgesehen ist, der um eine in Normalrichtung zu einer längs liegenden Symmetrieachse ausgerichteten Luftkanalachse (10) schwenkbar ist, wobei die Luftkanalachse (10) ein Bestandteil des Luftkanals (9) sein kann und wobei der Luftkanal (9) so mit dem mechanischen Bauteil (8) gekoppelt ist, dass ein Längsverschieben des Reiterverstellknopfes (4) zu einem Schwenken des Luftkanals (9) führt.

5. Luftausströmer (1) nach einem der vorhergehenden Ansprüche, **dadurch gekennzeichnet, dass** das Koppelelement (8) mindestens ein Gelenk (11) mit drei Freiheitsgraden aufweist.

6. Luftausströmer (1) nach einem der vorhergehenden Ansprüche, **dadurch gekennzeichnet, dass** das Koppelelement (8) so an das Ende des ersten Einzelteils (6) gekoppelt ist, dass es von einer Schwenkbewegung der Lamelle (3.2) entkoppelt ist und sich nur eine Längsverschiebung der Lamelle (3.2) auf das Koppelelement (8) überträgt.

7. Luftausströmer (1) nach einem der vorhergehenden Ansprüche, **dadurch gekennzeichnet, dass** das erste Einzelteil (6) mindestens einen Anschlag zur Begrenzung der Längsverschiebung aufweist.

## Claims

1. Air vent (1) with a device (2) for influencing a direction of an air flow, which is located on a side of the air vent (1) which faces the room to be ventilated and which comprises at least one louver (3,1, 3.2) and a rider adjusting knob (4) located on the louver (3.2), by means of which a coupling element (8) can be adjusted by displacement in the longitudinal direction of the louver (3.2), in particular to change the direction of the air flow, **characterised in that** the louver (3.1, 3.2) is designed in several parts and the rider adjusting knob (4) is permanently joined to a first individual part (6) and displaceable together therewith in the longitudinal direction, the coupling element (8) being joined to an end of the first individual part (6) which lies outside the air flow.

2. Air vent (1) according to claim 1, **characterised in that** the louver (3.2) comprises a second individual part (7), wherein the second individual part (7) can be inserted at least partially into the first individual part (6) or the first individual part (6) can be inserted at least partially into the second individual part (7).

3. Air vent (1) according to claim 1 or 2, **characterised in that** the louver (3.1, 3.2) has a longitudinally oriented louver axis (5) about which it can be pivoted, wherein the louver axis (5) may be a component of the first individual part (6) and/or of the second individual part (7).

4. Air vent (1) according to any of the preceding claims, **characterised in that** at least one air duct (9) in the form of an oblong hollow body with open ends is provided to change the direction of the air flow, which air duct is pivotable about an air duct axis (10) aligned perpendicular to a longitudinal axis of symmetry, wherein the air duct axis (10) may be a component of the air duct (9) and wherein the air duct (9) may be coupled to the mechanical component (8) in such a way that a longitudinal displacement of the rider adjusting knob (4) results in a pivoting of the air duct (9).

5. Air vent (1) according to any of the preceding claims, **characterised in that** the coupling element (8) includes at least one link (11) with three degrees of freedom.

6. Air vent (1) according to any of the preceding claims, **characterised in that** the coupling element (8) is coupled to the end of the first individual part (6) in such a way that it is decoupled from a pivoting movement of the louver (3.2) and only a longitudinal movement of the louver (3.2) is transmitted to the coupling element (8).

7. Air vent (1) according to any of the preceding claims, **characterised in that** the first individual part (6) comprises at least one stop to limit the longitudinal displacement.

## Revendications

1. Diffuseur d'air (1) comprenant un dispositif (2) servant à influencer une direction d'un flux d'air, dispositif qui est disposé sur un côté du diffuseur d'air (1), tourné vers un espace à ventiler, et comporte au moins une lamelle (3.1, 3.2) et une tête de réglage à curseur (4) disposée sur la lamelle (3.2), tête de réglage à curseur avec laquelle un élément de couplage (8), servant en particulier à modifier la direction du flux d'air, peut être réglé par déplacement dans le sens longitudinal de la lamelle (3.2),
**caractérisé en ce que** la lamelle (3.1, 3.2) est configurée en comportant plusieurs pièces, et la tête de réglage à curseur (4) est reliée fixement à une première pièce simple (6) et peut, de façon conjointe, se déplacer longitudinalement avec cette pièce simple, où l'élément de couplage (8) est relié à une extrémité de la première pièce simple (6) se trouvant à l'extérieur du flux d'air.

2. Diffuseur d'air (1) selon la revendication 1, **caractérisé en ce que** la lamelle (3.2) comporte une deuxième pièce simple (7), où la deuxième pièce simple (7) peut coulisser au moins partiellement dans la première pièce simple (6), ou bien la première pièce simple (6) peut coulisser au moins partiellement dans la deuxième pièce simple (7).

3. Diffuseur d'air (1) selon l'une ou l'autre des revendications 1 et 2, **caractérisé en ce que** la lamelle (3.1, 3.2) comporte un axe de lamelle (5) disposé longitudinalement, autour duquel elle peut pivoter, où l'axe de lamelle (5) peut être un composant de la première pièce simple (6) et / ou de la deuxième pièce simple (7).

4. Diffuseur d'air (1) selon l'une quelconque des revendications précédentes, **caractérisé en ce qu'**il est prévu au moins un conduit d'air (9) sous la forme d'un corps creux oblong comprenant des extrémités ouvertes servant à modifier la direction du flux d'air, conduit d'air qui peut pivoter autour d'un axe de conduit d'air (10) orienté dans une direction verticale par rapport à un axe de symétrie situé longitudinalement, où l'axe de conduit d'air (10) peut être un composant du conduit d'air (9), et où le conduit d'air (9) est couplé au composant mécanique (8), de manière telle qu'un déplacement longitudinal de la tête de réglage à curseur (4) déclenche un pivotement du conduit d'air (9).

5. Diffuseur d'air (1) selon l'une quelconque des revendications précédentes, **caractérisé en ce que** l'élément de couplage (8) comporte au moins une articulation (11) ayant trois degrés de liberté.

6. Diffuseur d'air (1) selon l'une quelconque des revendications précédentes, **caractérisé en ce que** l'élément de couplage (8) est couplé à l'extrémité de la première pièce simple (6), de manière telle qu'il soit découplé par rapport à un mouvement de pivotement de la lamelle (3.2) et que seulement un déplacement longitudinal de la lamelle (3.2) se transmette à l'élément de couplage (8).

7. Diffuseur d'air (1) selon l'une quelconque des revendications précédentes, **caractérisé en ce que** la première pièce simple (6) comporte au moins une butée pour la limitation du déplacement longitudinal.
